# EUROPÄISCHE PATENTSCHRIFT

(11) **EP 1 208 176 B1**
(45) Veröffentlichungstag und Bekanntmachung des Hinweises auf die Patenterteilung: **22.09.2004**
(21) Anmeldenummer: 00956242.2
(22) Anmeldetag: 21.07.2000
(51) Int. Cl.: C09D 167/02, C09D 5/03

(54) **VERFAHREN ZUR HERSTELLUNG WITTERUNGSSTABILER PULVERBESCHICHTUNGEN**
METHOD FOR THE PRODUCTION OF WEATHER-RESISTANT POWDER COATINGS
PROCEDE DE REALISATION DE RECOUVREMENTS EN POUDRE RESISTANT AUX INTEMPERIES

(30) Priorität: 30.07.1999 DE 19935539
(43) Veröffentlichungstag der Anmeldung: 29.05.2002
(73) Patentinhaber: E.I. DU PONT DE NEMOURS AND COMPANY, Wilmington, Delaware 19898 (US)
(72) Erfinder: THIELE, Olaf, 85107 Baar Ebenhausen (DE); ZIMMERMANN, Frank, D-84160 Frontenhausen (DE)
(74) Vertreter: Gille Hrabal Struck Neidlein Prop Roos
(86) Internationale Anmeldenummer: PCT/EP2000/006996
(87) Internationale Veröffentlichungsnummer: WO 2001/009258

(56) Entgegenhaltungen:
- EP-A- 0 600 546
- WO-A-99/41323
- PATENT ABSTRACTS OF JAPAN vol. 008, no. 102 (C-222), 12. Mai 1984 (1984-05-12) & JP 59 016571 A (NIPPON PAINT KK), 27. Januar 1984 (1984-01-27)
- DATABASE CHEMICAL ABSTRACTS [Online] STN; Vol. 128, no.12, Columbus, Ohio, US, 23. März 1998 (1998-03-23) BAER KAI: "Crosslinking of powder paints in a few seconds" XP002154198 & JOT, J. OBERFLAECHENTECH. 1988, 38(2), S. 26-29,

## Beschreibung

Die Erfindung betrifft ein Verfahren zur Herstellung von außenbeständigen Pulverlackbeschichtungen auf metallischen und nichtmetallischen Substraten.

Die dekorative oder funktionale Beschichtung von Oberflächen mit Pulverlacken hat aufgrund der hohen Wirtschaftlichkeit des Verfahrens sowie der günstigen Beurteilung aus der Sicht des Umweltschutzes bei der Beschichtung von Metallen ein breites Anwendungsgebiet gefunden. Zahlreiche Pulverlackformulierungen für die verschiedenen Einsatzgebiete wurden entwickelt. Für Beschichtungen, die UV-Strahlung ausgesetzt werden, beispielsweise im Außenbereich (Fassadenbeschichtungen, Fensterprofile, Garagentore, Metalltüren, Gartenmöbel, Automobilteile etc.) sind beständige Pulverlacksysteme, beispielsweise auf Basis von Polyesterharzen, mit endständigen Carboxylgruppen, entwickelt worden. Die Polyesterharze werden in der Regel mit niedermolekularen, höherfunktionellen Vernetzern, wie multifunktionellen Epoxiden oder Hydroxyalkylamiden ausgehärtet.

Außenbeständige Pulverlacke auf Basis von Polyestern, die auf aromatischen Carbonsäuren wie Terephthalsäure oder Isophthalsäure basieren, sind seit langem bekannt und im Einsatz. Pulverlacke, die auf diesen Polyesterharzen basieren, sind kostengünstig herzustellen, und die Beschichtungen weisen gute mechanische Eigenschaften sowie eine Witterungsbeständigkeit auf, die für zahlreiche Anwendungen, insbesondere in Gebieten mit gemäßigten klimatischen Verhältnissen, ausreicht. Derartige Pulverlacksysteme werden nach den bekannten üblichen Methoden auf dem Substrat gehärtet.

Es hat nicht an Versuchen gefehlt, die Witterungsbeständigkeit von Pulverlacksystemen zu erhöhen. Beispielsweise wurde versucht, durch Einsatz von Polyesterharzen, die ausschließlich oder überwiegend aus aliphatischen und/oder cycloaliphatischen Komponenten aufgebaut sind, die Witterungsbeständigkeit von Pulverbeschichtungen zu verbessern. Solche Polyesterharze sind beispielsweise in der US Patentschrift 5,486,988 sowie in der EP 0 561 102 beschrieben. Aus solchen Harzen hergestellte Pulverlacke zeigen zwar eine verbesserte Bewitterungsbeständigkeit, haben allerdings im Vergleich zu den oben erwähnten Systemen auf Basis von aromatischen Carbonsäuren wesentlich schlechtere mechanische Eigenschaften sowie deutlich höhere Rohstoffkosten.

Es stellt sich daher die Aufgabe, kostengünstige Pulverlackbeschichtungen zur Verfügung zu stellen, welche die oben geschilderten Nachteile nicht besitzen. Insbesondere sollen die Pulverbeschichtungen den Ansprüchen einer erhöhten Witterungsstabilität genügen, so daß sie auch z. B. in Gebieten mit extremen klimatischen Verhältnissen ohne Beeinträchtigung der Beschichtungen einsetzbar sind.

Die Aufgabe kann gelöst werden durch ein Verfahren, bei dem Pulverlackbeschichtungen auf der Basis von Polyesterharzen, welche aromatische Dicarbonsäuren ihre Anhydride und/oder Ester als wesentlichen Bestandteil enthalten und mit niedermolekularen, mehrfunktionellen Epoxidharzen vernetzt sind, gehärtet werden durch Verwendung von Strahlung im nahen Infrarotbereich (NIR).

Die Pulverlackzusammensetzungen können beispielsweise 40 bis 95 Gew.-% der Polyester und 1 bis 20 Gew.-% der niedermolekularen, mehrfunktionellen Epoxidharze enthalten, wobei auch weitere übliche Bestandteile in üblichen Mengen enthalten sein können, so daß sich sämtliche Bestandteile auf 100 Gew.-% addieren.

Die Polyester weisen beispielsweise ein zahlenmittleres Molekulargewicht Mn von 500 bis 10000, und beispielweise eine Glasübergangstemperatur von 30 bis 80°C auf.

Die Polyester können hydroxy- und/oder carboxyfunktionalisiert sein, wobei, falls eine derartige Funktionalisierung vorliegt, die OH-Zahl beispielsweise 10 bis 200 und die Säurezahl beispielsweise 10 bis 200 betragen kann.

Bei der erfindungsgemäß verwendeten NIR-Strahlung handelt es sich um kurzwellige Infrarot-Strahlung mit einem Maximum der Intensität im Wellenlängenbereich von etwa 760 bis etwa 1500 Nanometer, bevorzugt 780 bis 1200 Nanometer. Die Anwendung von NIR-Strahlung zum Trocknen von Lacken ist allgemein bekannt (Kai Bär, JOT 2/98). Nach dieser Methode können Pulverlacke mit Hilfe von NIR-Strahlung hoher Intensität in kurzer Zeit gehärtet werden, ohne daß es zu einer wesentlichen Erwärmung des Substrates kommt.

Überraschend wurde gefunden, daß Pulverlackbeschichtungen auf Basis von Polyesterharzen, die aromatischen Dicarbonsäuren wie Terephthalsäure oder Isophthalsäure ihre Anhydride und/oder Ester als wesentliche Bausteine enthalten zusammen mit niedermolekularen, mehrfunktionellen Epoxiden als Vernetzer, bei Aushärtung mit NIR-Strahlung eine Witterungsbeständigkeit aufweisen, die deutlich über der üblicherweise bei konventioneller Aushärtung, beispielsweise in einem Umluftofen, erzielten Beständigkeit für solche Harzsysteme liegt. Dabei liegen die mechanischen Eigenschaften, wie z. B. die Flexibilität der Beschichtung, mindestens auf dem Niveau, das bei konventioneller Härtung erzielt wurde. Zusätzlich erlaubt die NIR-Härtung eine wesentliche Verkürzung der Aushärtungszeit im Vergleich zur konventionellen Ofenhärtung.

Die für das erfindungsgemäße Verfahren einsetzbaren Pulverlackformulierungen haben als Bindemittelbasis hydroxy- und/oder carboxylfunktionelle Polyester, die als Säurebaustein allein oder als Hauptbestandteil aromatische Dicarbonsäuren, deren Anhydride und/oder Ester, wie z. B. Terephthalsäure oder Isophthalsäure enthalten, welche mit den üblichen aliphatischen Diolen, wie z. B. Neopentylglycol, Ethylenglycol, Butylenglycol, Hexandiol oder Diethylenglycol oder Cyclohexandimethanol umgesetzt werden. Beispiele für weitere aromatische Dicarbonsäuren sind Naphthalin-2,6-dicarbonsäure, Naphthalin-1,5-dicarbonsäure und Phthalsäure. Bevorzugt kommen carboxyfunktionelle Polyester zum Einsatz auf der Basis von Terephthalsäure und Isophthalsäure bzw. deren Anhydriden.

Bevorzugt ist ein Säurebestandteil an aromatischen Dicarbonsäuren von mehr als 50%, bezogen auf den Dicarbonsäureanteil im Polyester, besonders bevorzugt von mehr als 50 Gew.-% an Terephthalsäure und/oder Isophthalsäure bzw. deren Anhydriden und/oder Estern.

Gegebenenfalls können als Nebenbestandteil auch aliphatische und/oder cycloaliphatische Dicarbonsäuren, wie z. B. Adipinsäure oder Cyclohexandicarbonsäure eingesetzt werden, wobei der Anteil aliphatischer und/oder cycloaliphatischer Dicarbonsäuren nicht mehr als 50 % beträgt, bezogen auf den Dicarbonsäureanteil im Polyester. Als weitere Komponenten können die Polyesterharze geringe Mengen an mehrfunktionellen Verzweigern, wie z. B. Glyzerin oder Trimethylolpropan sowie Additive wie z. B. Beschleuniger enthalten. Es ist auch möglich, Mischungen verschiedener Polyester einzusetzen. Die erfindungsgemäß verwendbaren Polyester können üblicherweise durch Reaktion der Dicarbonsäuren, deren Anhydriden und/oder Estern mit den Diolen hergestellt werden, siehe beispielsweise D. A. Bates "The Science ofPowder Coatings", Vol. 1 u. 2, Gardiner House, London, 1990.

Die für das erfindungsgemäße Verfahren geeigneten Pulverlackformulierungen enthalten die zur Aushärtung erforderliche Menge der niedermolekularen, mehrfunktionellen Epoxide als Vernetzerkomponente. Die Menge beträgt im allgemeinen 1 bis 20 Gew.-%, bezogen auf das Polyester-Epoxid-System. Als Vernetzer sind beispielsweise Triglycidylisocyanurat (TGIC), Polyglycidylester auf Basis Terephthalsäure/Trimellitsäure (erhältlich z. B. von Ciba Spezialitäten Chemie unter dem Handelsnamen Araldite^{R} PT 910), mehrfunktionelle, aliphatische Oxiranverbindungen, die beispielsweise von der Firma DSM Resins unter dem Handelsnamen Uranox^{R} angeboten werden oder glycidylfunktionalisierte (Meth)acrylcopolymere einsetzbar.

Die Pulverlackzusammensetzungen, enthaltend die Polyester und Epoxid-Vernetzer, können gegebenenfalls weitere übliche Bestandteile wie z. B. Pigmente und/oder Füllstoffe sowie gegebenenfalls weitere übliche Additive, wie Verlaufsmittel, Entgasungsmittel und/oder Beschleuniger enthalten. Diese werden in üblichen, dem Fachmann geläufigen Mengen zugesetzt. Beispielsweise werden 0 bis 50 Gew.-% Pigmente und/oder Füllstoffe und 0,02 bis 3 Gew.-% übliche Additive eingesetzt.

Die Herstellung der erfindungsgemäßen Pulverlacke kann nach bekannten, dem Fachmann geläufigen Extrusions-/Mahlverfahren erfolgen. Es können auch andere Verfahren, z. B. die Herstellung von Pulvern durch Versprühen aus überkritischen Lösungen oder das Non-Aqueous-Dispersion-Verfahren Anwendung finden.

Im erfindungsgemäßen Verfahren werden die oben beschriebenen Pulverlacke mit den bekannten Pulverapplikationsverfahren, beispielsweise durch elektrostatische Sprühverfahren, auf die zu beschichtenden Substrate aufgebracht und anschließend durch Bestrahlung mit NIR-Strahlung, die beispielsweise ein Maximum der Intensitätsverteilung im Bereich 800 bis 1200 nm aufweist, in einem Zeitraum von beispielsweise 1 bis 200 Sekunden, bevorzugt 1 bis 30 Sekunden aufgeschmolzen und ausgehärtet. Für das erfindungsgemäße Beschichtungsverfahren geeignete Strahler sind beispielsweise von der Fa. Industrie SerVis kommerziell verfügbar, beispielsweise können Halogenlampen, welche Strahler-Temperaturen von 3500 K erreichen, verwendet werden. Es kann auch eine Kombination mit konventionellen Wärmequellen (Infrarot-Strahlung, Konvektionsöfen) sowie gegebenenfalls mit zusätzlichen Reflektor-/Linsensystemen eingesetzt werden.

Bevorzugt wird mit NIR-Strahlung ohne zusätzliche Kombinationen gehärtet.

Die nach dem erfindungsgemäßen Verfahren erhaltenen Beschichtungen haben einen ausgezeichneten Verlauf, gute mechanische Eigenschaften sowie eine deutlich verbesserte Witterungsbeständigkeit im Vergleich mit konventionell ausgehärteten Pulverlackbeschichtungen auf gleicher Harzbasis.

Durch Variation der Pulverlackrezeptur ist der gewünschte Glanzgrad der Pulverbeschichtung einstellbar. Es ist möglich, sowohl hochglänzende, als auch seidenglänzende oder matte Beschichtungen herzustellen.

Die nach dem erfindungsgemäßen Verfahren erhaltenen Pulverbeschichtungen können für alle Anwendungen, für die eine Witterungsbeständigkeit erforderlich ist, eingesetzt werden. Als Substrate können beispielsweise Metalle, wie Aluminium, Stahl, aber auch Holzwerkstoffe wie z. B. mitteldichte Faserplatten (MDF) oder Mischungen aus verschiedenen Materialien eingesetzt werden. Aufgrund der guten mechanischen Eigenschaften, insbesondere der Flexibilität der erhaltenen Beschichtungen, ist das Verfahren auch besonders zur Beschichtung von Coil oder Pre-coated Metals (PCM) geeignet.

Das erfindungsgemäße Verfahren erlaubt die wirtschaftliche Herstellung außenbeständiger Pulverbeschichtungen mit ausgezeichneten Eigenschaften durch Verwendung kostengünstiger Rohstoffe sowie einer deutlichen Reduzierung der Aushärtungszeit.

Die nachfolgenden Beispiele erläutern die Erfindung:

### Herstellung der Pulverlacke

Die in den Tabellen aufgelisteten Pulverlackformulierungen wurden nach dem für die Pulverlackherstellung üblichen Verfahren durch intensives Vermischen der Komponenten, Extrudieren und Mahlen in Beschichtungspulver überführt.
Die Pulver wurden mit gleicher Schichtdicke elektrostatisch auf Prüfbleche aus Aluminium mit Hilfe einer Corona Pulversprühpistole appliziert.
Die Aushärtung nach dem erfindungsgemäßen Verfahren erfolgte auf einer Bandanlage, die mit einem 500-W-NIR-Strahler der Fa. IndustrieSerVis mit einer Flächen-Leistung von 120 kW/m² ausgerüstet ist. Die Aushärtungszeiten betragen 5 Sekunden für Beispiel 1, 12,5 Sekunden für Beispiel 2, 15 Sekunden für Beispiel 3 und 8 Sekunden für Beispiel 4..
Die Aushärtung erfolgte mit einem Abstand von 50mm zwischen Strahler und Substrat.
Für die Vergleichsbeispiele wurden die Proben 10 Minuten bei 200°C in einem Umluftofen ausgehärtet.

**Tabelle 1:**

| Pulverlackzusammensetzungen | | | | |
|---|---|---|---|---|
| Beispiel Nummer | 1 | 2 | 3 | 4 |
| Farbton | schwarz | rot | weiss | grau |
| Harz Alftalat AN 03640 | 57 % | 57 % | 57 % | 57 % |
| Härter Araldite PT 910 | 5,2 % | 5,2 % | 5,2 % | 5.2 % |
| Pigmentierung | 1 % Ruß | 2 % organisches Rotpigment | 25 % Titandioxid | 19,8 % anorganische Pigmente |
| Füllstoffe | 32,3 % | 31,3 % | 8,3 % | 13,5 % |
| * Ein Polyester, dessen Säurekomponente als Hauptbestandteile Terephthalsäure und Isophthalsäure enthält. | | | | |

Alle Formulierungen enthalten 4,2 % eines handelsüblichen Verlaufsmittels sowie 0,3% eines Entgasungshilfsmittels.

### Bewitterungsversuche

Die Überprüfung der mechanischen Eigenschaften vor und nach den Bewitterungstests ergab für alle Proben folgende Werte:
Kugelschlagprüfung (ASTM D 2794)20 inch pound
Dornbiegeprüfung (DIN EN ISO 1519)4mm
Erichsen-Prüfung (DIN EN ISO 1520)7mm
Gitterschnitt (DIN EN ISO 2094)GtOA

Alle Muster wurden in einem Schnellbewitterungstest QUV (B) 313nm geprüft. In Tabelle 2 sind die Zeiträume aufgeführt, nach denen der Restglanz (gemessen bei 60 °) auf 50% des Ausgangswertes vor der Bewitterung abgefallen ist.

**Tabelle 2:**

| Ergebnisse der Untersuchungen nach Bewitterung | | | | | | | | |
|---|---|---|---|---|---|---|---|---|
| Probe nach Beispiel | 1 | 1* | 2 | 2* | 3 | 3* | 4 | 4* |
| Restglanz <50% nach h | 450 | 350 | 500 | 400 | 500 | 400 | 500 | 350 |

| | | | | | | | | |
|---|---|---|---|---|---|---|---|---|
| * Nicht erfindungsgemäße Proben, die im Umluftofen ausgehärtet wurden. | | | | | | | | |

## Patentansprüche

1. Verfahren zur Herstellung witterungsstabiler Pulverbeschichtungen auf metallischen oder nicht-metallischen Oberflächen durch Auftrag einer Pulverlackzusammensetzung auf der Basis von Polyesterharzen und Epoxiden als Vernetzern und anschließendes Aufschmelzen und Aushärten durch NIR-Strahlung, **dadurch gekennzeichnet, dass** eine Pulverlackzusammensetzung aufgetragen wird, die Polyesterharze, deren Säurebaustein zu mehr als 50 Gew.-% auf Terephthalsäure und/oder Isophthalsäure bzw. deren Anhydriden und/oder Estern basiert, sowie als Vernetzer mehrfunktionelle niedermolekulare Epoxide in der Form von Polyglycidylestern auf der Basis von Terephthalsäure/Trimellitsäure, enthält.

2. Verfahren nach Anspruch 1, **dadurch gekennzeichnet, dass** eine Pulverlackzusammensetzung eingesetzt wird, die 40 bis 95 Gew.-% des Polyesterharzes enthält.

3. Verfahren nach Anspruch 2, **dadurch gekennzeichnet, dass** der Polyester carboxyfunktionell ist.

4. Verfahren nach Anspruch 1 bis 3, **dadurch gekennzeichnet, dass** die Härtungszeiten in einem Bereich von 1 bis 30 Sekunden liegen.

5. Verfahren nach Anspruch 1 bis 4, **dadurch gekennzeichnet, dass** NIR-Strahler mit einem Maximum der Intensität von 0,8 bis 1,2µm zum Einsatz kommen.

## Claims

1. Process for the production of weather-resistant powder coatings on metallic or non-metallic surfaces by application of a powder coating composition based on polyester resins and epoxides as crosslinkers, followed by melting and curing by NIR radiation, **characterised in that** a powder coating composition is applied which contains polyester resins whose acid structural unit is based on over 50 wt.% terephthalic acid and/or isophthalic acid or anhydrides and/or esters thereof, and polyfunctional low molecular weight epoxides in the form of polyglycidyl esters based on terephthalic acid/trimellitic acid as crosslinkers.

2. Process according to claim 1, **characterised in that** a powder coating composition is used which contains 40 to 95 wt.% of the polyester resin.

3. Process according to claim 2, **characterised in that** the polyester is carboxy-functional.

4. Process according to claim 1 to 3, **characterised in that** the curing times are in a range from 1 to 30 seconds.

5. Process according to claim 1 to 4, **characterised in that** NIR radiators with a maximum intensity of 0.8 to 1.2 µm are used.

## Revendications

1. Procédé de réalisation de revêtements en poudre, résistants aux intempéries, sur des surfaces métalliques ou non métalliques, par le dépôt d'un composé de vernis en poudre à base de résines polyesters et d'époxydes en tant qu'agents de réticulation, et une mise en fusion consécutive, suivie d'un durcissement par rayonnement dans l'infrarouge proche, **caractérisé en ce que** l'on dépose un composé de vernis en poudre, qui contient des résines polyesters, dont le module acide est formé à plus de 50 % en poids d'acide téréphtalique et/ou d'acide isophtalique ou des anhydrides et/ou esters de ceux-ci, ainsi que des époxydes multifonctionnels de faible poids moléculaire, en tant qu'agents de réticulation, sous forme d'esters de polyglycidyles à base d'acide téréphtalique/acide trimellitique.

2. Procédé selon la revendication 1, **caractérisé en ce que** l'on utilise un composé de vernis en poudre qui contient 40 à 95 % en poids de résine polyester.

3. Procédé selon la revendication 2, **caractérisé en ce que** le polyester porte une fonction carboxyle.

4. Procédé selon l'une quelconque des revendications 1 à 3, **caractérisé en ce que** les durées de durcissement se situent dans une plage de 1 à 30 secondes.

5. Procédé selon l'une quelconque des revendications 1 à 4, **caractérisé en ce que** l'on utilise des dispositifs de rayonnement dans l'infrarouge proche avec un maximum d'intensité de 0,8 à 1,2 µm.
